# EUROPEAN PATENT SPECIFICATION

(11) **EP 2 722 378 B1**
(45) Date of publication and mention of the grant of the patent: **27.05.2015**
(21) Application number: 13171326.5
(22) Date of filing: 10.06.2013
(51) Int. Cl.: C09K 8/60, C09K 8/66, C09K 8/70, C09K 8/80

(54) **Method for fracturing or fraccing a well**
Verfahren zum Brechen oder Fracken eines Bohrloches
Procédé de fracturation de puits

(30) Priority: 18.10.2012 US 201261715351 P
(43) Date of publication of application: 23.04.2014
(73) Proprietor: Linde Aktiengesellschaft, 80331 München (DE)
(72) Inventor: Shirley, Arthur I., Hillsborough, NJ 08844-2241 (US); Wexler, Eugene, Summit, NJ 07901 (US); Schneider, Patrick, Richmond, TX 77406 (US); Watts, Robin, Smithville, TX 78957 (US)
(74) Representative: Hofmann, Andreas

(56) References cited:
- US-A1- 2008 237 141
- US-A1- 2010 065 271
- US-A1- 2010 252 262
- US-A1- 2010 256 024
- US-A1- 2012 071 371

## Description

### Technical field of the present invention

The present invention relates to a method for forming gas-filled nanobubbles on the surface of proppant particles.

The present invention further relates to a method for fracturing or fraccing a well producing gas and/or oil *(cf.* US 2010/0252262 A1*).*

### Technological background of the present invention

The generation of gas-filled nanobubbles on solid surfaces has been accomplished in a variety of manners. For example, physical irritation is applied to microbbubbles contained in a liquid so that the microbubbles are abruptly contracted to form nanobubbles.

Alternatively, nanobubbles have been produced by a nanobubble-generating nozzle capable of generating nanobubbles by allowing gas to flow in flowing liquid without a separate device for mixing bubbles.

Nanobubbles have also been created employing filtering through a porous media.

In the production of natural gas from shale or other "tight-gas" formations, hydraulic fracturing (or "frac") is used to break up the rock around the well bore and to reduce the resistance to gas flow. The frac technique generally requires injecting into the well large amounts of fluids that are compressible like nitrogen (N₂) or carbon dioxide (CO₂) or incompressible like water or liquefied petroleum gas.

The fluids are pumped to high pressure to create large compressive forces around the well bore. The fluids can be pumped to depths of 10,000 feet *(= about 3,048 metres)* to 20,000 feet *(= about 6,096 metres)* below the surface of the earth using conventional (vertical) and unconventional (horizontal) drilling techniques. These forces break the rock and create tiny fissures for gas and/or oil to flow to the surface.

One of the parameters affecting oil and gas production from the well is the conductivity of proppant arrangement once it is settled within the fissures. This is directly related to proppant load and distribution within the frac(turing) agent or frac(turing) fluid, as well as the ability of such mixture to penetrate small-size fractures and specifically, secondary fracture networks characterized by sub-millimeter widths and heights and often quite significant lengths.

Enabling access to such secondary fracture networks may result in up to a fifteen percent increase in hydrocarbon production. The non-uniform distribution of the proppant results in uncontrolled proppant placement which may simply block the passages.

An ideal fluid/proppant mixture, for example, would contain reduced amounts of a uniformly distributed proppant to enable the uniform placement thereof within fractures. A single layer of proppant particles may be enough to keep the fracture open while providing optimal conductivity. This would require low specific gravity to enable uniform distribution, delivery and/or placement and high strength/crush resistance to withstand high formation pressures/closure stresses.

Currently, the proppant market worldwide is approximately seventeen billions pounds *(= about 7,711 millions kilograms)* per year, 99 percent of which consists of sand, resin-coated sand and ceramic proppants. Despite a number of efforts to develop light and ultra-light weight strong proppants, the majority of them have limited application and remain cost prohibitive. The smaller diameter, spherical sand particles thus remain a cost-effective solution.

*Regarding the technological background of the present invention, reference can be made to* US 2008/0237141 A1, to US 2010/0065271 A1, to US 2010/0256024 A1, or to US 2012/0071371 A1.

### Disclosure of the present invention: object, solution, advantages

Starting from the disadvantages and shortcomings as described above and taking the prior art as discussed into account, an object of the present invention is to overcome problems that earlier methods have experienced.

This object may be realized by a method comprising the features of claim 1 as well as by a method comprising the features of claim 5, in particular by providing for nanobubble-enhanced proppant for well fracturing or well fraccing. Advantageous embodiments and expedient improvements of the present invention are disclosed in the respective dependent claims.

The present invention comprises a method for forming stable, gas-filled nanobubbles on the surface of a proppant particle, comprising the steps of
- mixing water with a surfactant;
- adding the mixture to the proppant; and
- pressurizing for a set time period.

According to an advantageous embodiment of the present invention,
- the mixture of water and surfactant is added to the proppant by supplying the mixture to a container filed with the proppant, and
- the container is pressurized for the set time period.

The pressurizing for the set time period is realized by means of at least one gas, favourably selected from the group consisting of nitrogen, argon, methane, carbon dioxide, helium and hydrogen.

According to a preferred embodiment of the present invention, the set time period is about two gas-diffusion time scales to about three gas-diffusion time scales.

The present invention further comprises a method for fracturing or fraccing a well producing gas and/or oil, comprising the steps of
- forming nanobubbles on the surface of a proppant particle and combining the nanobubble-surrounded proppant particle with at least one frac(turing) medium to form foam or an emulsion; and
- adding the formed foam or emulsion to the well.

According to an advantageous embodiment of the present invention, the forming the gas-filled nanobubbles on the surface of the proppant particles is selected from the group consisting of
- the above-described method for forming stable, gas-filled nanobubbles on the surface of a proppant particle,
- adsorption of gas molecules from at least one aqueous solution,
- ultrasonic formation,
- electrolytic generation, and/or
- surface nucleation from gas-enriched aqueous solutions.

According to an expedient embodiment of the present invention, the combining the nanobubble-surrounded proppant particles with the at least one frac(turing) medium is provided by suspending the nanobubble-surrounded proppant particles within the at least one frac(turing) medium, favourably selected from the group consisting of carbon dioxide emulsions and/or foams, nitrogen emulsions and/or foams, liquefied natural gas, liquid petroleum gas, slick water, and/or mixtures thereof.

According to a preferred embodiment of the present invention, the formed foam or emulsion is added as a frac(turing) agent or frac(turing) fluid.

According to an advantageous embodiment of the present invention, the formed foam or emulsion is added to at least one bore of the well.

According to an expedient embodiment of the present invention, the formed foam or emulsion is added to the well under pressure.

According to a favoured embodiment of the present invention, the method further enhances
- the distribution of the proppant particles within the frac(turing) agent or frac(turing) fluid,
- the delivery and/or placement of the proppant particles into small-size fractures, in particular secondary fracture networks,
in particular to enable high conductivity.

Depending on the proppant employed, a cationic surfactant, such as a low molecular weight polymer, which can be hydrophobically modified, can be employed. Alternatively, a low molecular weight anionic polymer can be used, which can be hydrophobically modified.

More particularly, when the proppant employed is sand (SiO₂), cationic surfactants can be employed selected from the group consisting of polymer having molecular weights less than 30 *kilo*grams/mole, which can be hydrophobically modified.

These low molecular weight cationic polymers can be selected from the group consisting of copolymers of acrylic acid, acrylamide, maleic acid and maleic acid esters, alpha olefins, acrylic acid esters, and partially hydrolyzed or cationically modified acrylamide derivatives.

When the proppant employed is a ceramic, anionic surfactants can be employed selected from the group consisting of polymer having molecular weights less than 30 *kilo*grams/mole, which can be hydrophobically modified.

These low molecular weight anionic polymers can be selected from the group consisting of sulfonates, sulfates, and carboxylic based surfactants, in particular from the group consisting of copolymers based on acrylic acid, maleic acid, alpha olefins, acrylic acid esters and condensation products of naphthalenesulphonic acid.

According to a preferred embodiment of the present invention, the surfactant
- increases the slipperiness of the frac(turing) agent or frac(turing) fluid, in particular for ease of pumping, and/or
- helps used frac(turing) agent or frac(turing) fluid to return to the surface of the well.

The present invention is a method for the production of an enhanced proppant and its suspension within a frac(turing) agent or frac(turing) fluid. Stable gas-filled nanobubbles attach to the surface of proppant particles and these modified proppant particles can be used
- with conventional frac(turing) agents or frac(turing) fluids, in particular with slick water, and/or
- with unconventional and/or energized frac(turing) agents or frac(turing) fluids, in particular with carbon dioxide/nitrogen emulsions and/or foams respectively.

The gas-filled nanobubbles can reduce specific gravity of the proppant particles and enable
- a more uniform distribution of reduced loads of proppant within the conventional and/or unconventional and/or energized frac(turing) agent or frac(turing) fluid as well as
- delivery and/or placement into small-size fractures, in particular secondary fracture networks.

### Brief description of the drawings

For a more complete understanding of the present inventive embodiment disclosures and as already discussed above, there are several options to embody as well as to improve the teaching of the present invention in an advantageous manner. To this aim, reference may be made to the claims dependent on claim 1 and on claim 5; further improvements, features and advantages of the present invention are explained below in more detail with reference to preferred embodiments by way of non-limiting example and to the appended drawing figure taken in conjunction with the following description of the embodiments, of which:

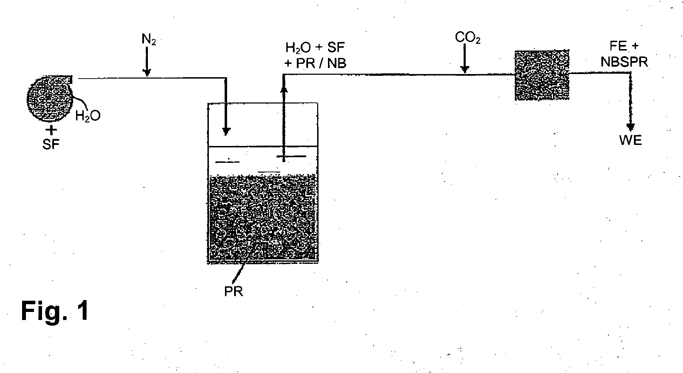

- Fig. 1: is a schematic of an embodiment according to the present invention, namely of a method for forming nanobubbles on the surface of a proppant and combining the treated proppant with at least carbon dioxide for addition to a gas and/or oil producing well.

### Detailed description of the drawings; best way of embodying the present invention

The present invention provides for an enhanced proppant PR for use in a frac(turing) operation or fraccing operation.

By creating gas-filled nanobubbles NB on the surface of the particles of the proppant PR, the proppant PR itself is not altered and a better distribution of the proppant PR within the frac(turing) agent or frac(turing) fluid, better delivery and/or more uniform placement of the proppant PR in the fractures to enable high conductivity are achieved.

A conventional, low-cost proppant can then be employed by creating the nanobubbles NB on the surface of the proppant PR rather than using a more expensive proppant material, or altering the proppant material outright. The present invention provides for a reduction in the specific gravity of the proppant PR used in a frac(turing) operation.

Turning to Fig. 1, water H₂O is mixed with an appropriate surfactant SF and supplied to a container filed with a proppant PR. This container is pressurized with nitrogen gas N₂ for the duration of the process which is typically equal to about two to three gas diffusion time scales.

Once the water H₂O is saturated with gas N₂, nucleation of nanobubbles NB on the surface of the particles of the proppant PR begins. The mixture of the water H₂O and nanobubble-surrounded proppant particles NBSPR is then mixed with carbon dioxide CO₂ at approximately forty percent to seventy percent to form foam or an emulsion FE.

The resulting nanobubble-surrounded proppant NBSPR is thus suspended within an aqueous carbon dioxide foam/emulsion FE. The carbon dioxide foam FE may also be stabilized with nano-particles to enable smaller bubble size and lower carbon dioxide content for viscosity control purposes.

The carbon dioxide foam/emulsion FE with nanobubble-enhanced proppant NBSPR is then fed to a bore of a well WE under suitable pressure. This process may be facilitated to enable in-situ formation of the nanobubble-surrounded proppant NBSPR in the frac(turing) agent or frac(turing) fluid.

While the present invention describes one means for generating nanobubbles NB on the surface of proppant particles PR, the nanobubbles NB can be generated by other methods such as adsorption of gas molecules from aqueous solutions, ultrasonic formation, electrolytic generation, surface nucleation from gas-enriched aqueous solutions.

The gases that can be employed are selected from the group consisting of nitrogen, argon, methane, carbon dioxide, helium and hydrogen.

Frac(turing) agents or frac(turing) fluids are conventional types such as slick water, carbon dioxide and/or nitrogen emulsions/foams, including nano-particle stabilized foams as well as gelled/foamed liquid petroleum gas/liquefied natural gas mixtures.

The nanobubble-surrounded proppant-frac(turing) fluid mixture uses carbon dioxide CO₂ as an example but may comprise two or more different gases.

### List of reference numerals

- CO₂: carbon dioxide
- FE: foam or emulsion, in particular carbon dioxide foam/emulsion
- H₂O: water
- NB: nanobubble(s)
- NBSPR: nanobubble-enhanced proppant or nanobubble-surrounded proppant, in particular nanobubble-enhanced proppant particle or nanobubble-surrounded proppant particle
- N₂: nitrogen
- PR: proppant, in particular proppant particle
- SF: surfactant
- WE: well

## Claims

1. A method for forming gas-filled nanobubbles (NB) on the surface of proppant particles (PR), comprising the steps of
- mixing water (H₂O) with a surfactant (SF);
- adding the mixture to the proppant (PR); and
- pressurizing *the mixture with at least one gas selected from the group consisting of nitrogen (N₂), argon, methane, carbon dioxide (CO₂)*, *helium and hydrogen* for a set time period.

2. The method according to claim 1, wherein
- the proppant (PR) is sand (SiO₂), and
- the surfactant (SF) is at least one cationic polymer selected from the group consisting of copolymers based on acrylic acid, acrylamide, maleic acid and maleic acid esters, alpha olefins, acrylic acid esters, and partially hydrolyzed or cationically modified acrylamide derivatives.

3. The method according to claim 1, wherein
- the proppant (PR) is at least one ceramic, and the surfactant (SF) is selected from the group consisting of copolymers based on acrylic acid, maleic acid, alpha olefins, acrylic acid esters and condensation products of naphthalenesulphonic acid.

4. The method according to at least one of claims 1 to *3*, wherein
- the mixture is added to the proppant (PR) by supplying the mixture to a container filled with the proppant (PR), and
- the container is pressurized.

5. A method for fracturing or fraccing a well (WE) producing gas and/or oil, comprising the steps of
- forming gas-filled nanobubbles (NB) on the surface of proppant particles (PR);
- combining the nanobubble-surrounded proppant particles (NBSPR) with at least one frac(turing) medium to form foam or an emulsion (FE); and
- adding the formed foam or emulsion (FE) to the well (WE).

6. The method according to claim *5*, wherein the combining the nanobubble-surrounded proppant particles (NBSPR) with the at least one frac(turing) medium is provided by suspending the nanobubble-surrounded proppant particles (NBSPR) within the at least one frac(turing) medium.

7. The method according to claim *5 or 6*, wherein the frac(turing) medium is selected from the group consisting of carbon dioxide (CO₂) emulsions and/or foams, nitrogen (N₂) emulsions and/or foams, liquefied natural gas, liquid petroleum gas, slick water, and/or mixtures thereof.

8. The method according to at least one of claims *5* to *7*, wherein the formed foam or emulsion (FE) is added as a frac(turing) agent or frac(turing) fluid.

9. The method according to at least one of claims *5* to *8*, wherein the formed foam or emulsion (FE) is added to at least one bore of the well (WE).

10. The method according to at least one of claims *5* to *9*, wherein the formed foam or emulsion (FE) is added to the well (WE) under pressure.

## Patentansprüche

1. Verfahren zum Bilden von gasgefüllten Nanobläschen (NB) auf der Oberfläche von Stützmittelteilchen (PR), das folgende Schritte umfasst:
- Mischen von Wasser (H₂O) mit einem Tensid (SF) ;
- Zugeben der Mischung zu dem Stützmittel (PR) ; und
- Druckbeaufschlagen der Mischung mit mindestens einem Gas aus der Gruppe bestehend aus Stickstoff (N₂), Argon, Methan, Kohlendioxid (CO₂), Helium und Wasserstoff über einen festgelegten Zeitraum.

2. Verfahren nach Anspruch 1, bei dem
- es sich bei dem Stützmittel (PR) um Sand (SiO₂) handelt und
- es sich bei dem Tensid (SF) um mindestens ein kationisches Polymer aus der Gruppe bestehend aus Copolymeren auf Basis von Acrylsäure, Acrylamid, Maleinsäure und Maleinsäureestern, alpha-Olefinen, Acrylsäureestern und teilhydrolysierten oder kationisch modifizierten Acrylamidderivaten handelt.

3. Verfahren nach Anspruch 1, bei dem
- es sich bei dem Stützmittel (PR) um mindestens eine Keramik handelt und
- das Tensid (SF) aus der Gruppe bestehend aus Copolymeren auf Basis von Acrylsäure, Maleinsäure, alpha-Olefinen, Acrylsäureestern und Kondensationsprodukten von Naphthalinsulfonsäure ausgewählt ist.

4. Verfahren nach einem der Ansprüche 1 bis 3, bei dem
- das Zugeben der Mischung zu dem Stützmittel (PR) durch Einspeisen der Mischung in einen Behälter, der mit dem Stützmittel (PR) gefüllt ist, erfolgt und
- der Behälter druckbeaufschlagt wird.

5. Verfahren zum Aufbrechen bzw. Fracking einer Gas und/oder Öl produzierenden Quelle (WE), das folgende Schritte umfasst:
- Bilden von gasgefüllten Nanobläschen (NB) auf der Oberfläche von Stützmittelteilchen (PR);
- Vereinigen der von Nanobläschen umgebenen Stützmittelteilchen (NBSPR) mit mindestens einem Aufbrech- bzw. Fracking-Medium zur Bildung von Schaum oder einer Emulsion (FE); und
- Zugeben des gebildeten Schaums bzw. der gebildeten Emulsion (FE) zu der Quelle (WE).

6. Verfahren nach Anspruch 5, bei dem das Vereinigen der von Nanobläschen umgebenen Stützmittelteilchen (NBSPR) mit dem mindestens einen Aufbrech- bzw. Fracking-Medium durch Suspendieren der von Nanobläschen umgebenen Stützmittelteilchen (NBSPR) in dem mindestens einen Aufbrech- bzw. Fracking-Medium bereitgestellt wird.

7. Verfahren nach Anspruch 5 oder 6, bei dem das Aufbrech- bzw. Fracking-Medium aus der Gruppe bestehend aus Kohlendioxid(CO₂)-Emulsionen und/oder -Schäumen, Stickstoff (N₂)-Emulsionen und/oder -Schäumen, verflüssigtem Erdgas, verflüssigtem Erdölgas, Slickwater und/oder Mischungen davon ausgewählt wird.

8. Verfahren nach mindestens einem der Ansprüche 5 bis 7, bei dem der gebildete Schaum bzw. die gebildete Emulsion (FE) als Aufbrech- bzw. Fracking-Medium zugegeben wird.

9. Verfahren nach mindestens einem der Ansprüche 5 bis 8, bei dem der gebildete Schaum bzw. die gebildete Emulsion (FE) zu mindestens einer Bohrung der Quelle (WE) gegeben wird.

10. Verfahren nach mindestens einem der Ansprüche 5 bis 9, bei dem der gebildete Schaum bzw. die gebildete Emulsion (FE) unter Druck zu der Quelle (WE) gegeben wird.

## Revendications

1. Procédé de formation de nanobulles remplies de gaz (NB) sur la surface de particules d'agent de soutènement (PR), comprenant les étapes consistant à
- mélanger de l'eau (H₂O) avec un tensioactif (SF) ;
- ajouter le mélange à l'agent de soutènement (PR) ; et
- pressuriser le mélange avec au moins un gaz choisi dans le groupe constitué par l'azote (N₂), l'argon, le méthane, le dioxyde de carbone (CO₂), l'hélium et l'hydrogène pendant une période de temps déterminée.

2. Procédé selon la revendication 1, dans lequel
- l'agent de soutènement (PR) est du sable (SiO₂), et
- le tensioactif (SF) est au moins un polymère cationique choisi dans le groupe constitué par les copolymères basés sur l'acide acrylique, l'acrylamide, l'acide maléique et les esters d'acide maléique, les alpha-oléfines, les esters d'acide acrylique, et les dérivés d'acrylamide partiellement hydrolysés ou modifiés cationiquement.

3. Procédé selon la revendication 1, dans lequel
- l'agent de soutènement (PR) est au moins une céramique, et
- le tensioactif (SF) est choisi dans le groupe constitué par les copolymères basés sur l'acide acrylique, l'acide maléique, les alpha-oléfines, les esters d'acide acrylique et les produits de condensation de l'acide naphtalènesulfonique.

4. Procédé selon au moins une des revendications 1 à 3, dans lequel
- le mélange est ajouté à l'agent de soutènement (PR) en introduisant le mélange dans un récipient rempli avec l'agent de soutènement (PR), et
- le récipient est pressurisé.

5. Procédé de fracturation ou fracturation hydraulique d'un puits (WE) produisant du gaz et/ou du pétrole, comprenant les étapes consistant à
- former des nanobulles remplies de gaz (NB) sur la surface de particules d'agent de soutènement (PR) ;
- combiner les particules d'agent de soutènement entourées de nanobulles (NBSPR) avec au moins un milieu de fracturation pour former une mousse ou une émulsion (FE) ; et
- ajouter la mousse ou émulsion formée (FE) au puits (WE).

6. Procédé selon la revendication 5, dans lequel la combinaison des particules d'agent de soutènement entourées de nanobulles (NBSPR) avec l'au moins un milieu de fracturation est réalisée en mettant en suspension les particules d'agent de soutènement entourées de nanobulles (NBSPR) dans l'au moins un milieu de fracturation.

7. Procédé selon la revendication 5 ou 6, dans lequel le milieu de fracturation est choisi dans le groupe constitué par les émulsions et/ou mousses de dioxyde de carbone (CO₂), les émulsions et/ou mousses d'azote (N₂), le gaz naturel liquéfié, le gaz de pétrole liquéfié, l'eau de fracturation, et/ou les mélanges de ceux-ci.

8. Procédé selon au moins une des revendications 5 à 7, dans lequel la mousse ou émulsion formée (FE) est ajoutée en tant qu'agent de fracturation ou fluide de fracturation.

9. Procédé selon au moins une des revendications 5 à 8, dans lequel la mousse ou émulsion formée (FE) est ajoutée à au moins un forage du puits (WE).

10. Procédé selon au moins une des revendications 5 à 9, dans lequel la mousse ou émulsion formée (FE) est ajoutée au puits (WE) sous pression.
